# FASCICULE DE BREVET EUROPEEN

(11) **EP 1 644 604 B1**
(45) Date de publication et mention de la délivrance du brevet: **11.11.2009**
(21) Numéro de dépôt: 04767516.0
(22) Date de dépôt: 30.06.2004
(51) Int. Cl.: E05C 19/14

(54) **VERROU DESTINE A RELIER DEUX PANNEAUX D'UNE STRUCTURE D'AEROPLANE**
ZUNGE ZUM VERBINDEN ZWEIER VERKLEIDUNGEN EINER FLUGZEUGSTRUKTUR
LATCH FOR JOINING TWO PANELS OF AN AIRPLANE STRUCTURE

(30) Priorité: 10.07.2003 FR 0308434
(43) Date de publication de la demande: 12.04.2006
(73) Titulaire: AIRCELLE, 76700 Gonfreville l'Orcher (FR)
(72) Inventeur: VAUCHEL, Guy, F-76610 LE HAVRE (FR)
(74) Mandataire: Gaillarde, Frédéric F. Ch.
(86) Numéro de dépôt international: PCT/FR2004/001672
(87) Numéro de publication internationale: WO 2005/014962

(56) Documents cités:
- EP-A- 0 431 769
- DE-C- 682 872
- US-A- 4 116 479
- US-B1- 6 343 815

## Description

La présente invention se rapporte à un verrou prévu pour relier deux éléments l'un à l'autre, ces éléments étant généralement des panneaux d'une structure d'aéroplane.

Il est déjà connu du brevet US 4 318 557 de réaliser un verrou reliant deux éléments et comprenant un crochet possédant une extrémité recourbée apte à venir en prise avec un organe de retenue solidaire du premier élément, un organe de manoeuvre monté pivotant autour d'un axe d'extrémité situé à l'opposé de l'extrémité recourbée du crochet, et une articulation se décomposant, d'une part, en une première paire de bielles de compression montées pivotantes autour d'un axe principal destiné à être rattaché fixement au second élément et d'un axe intermédiaire positionné entre l'axe principal et l'axe d'extrémité, et d'autre part, en une seconde paire de bielles de compression montées pivotantes autour dudit axe intermédiaire et de l'axe d'extrémité. Dans un tel verrou, l'axe principal statique est intercalé entre l'organe de manoeuvre et le crochet, et il supporte ce dernier. Généralement, un tel verrou est fixé en partie inférieure d'une structure d'aéroplane, l'organe de manoeuvre dirigé vers le sol. La cinématique du verrou et la gravité appliquée sur les moyens constitutifs de celui-ci contribuent alors au dégagement du crochet vis-à-vis de l'organe de retenue. Cependant, durant la phase d'ouverture, selon l'équilibrage de l'ensemble crochet/organe de manoeuvre, l'extrémité recourbée du crochet peut rester au contact de l'organe de retenue et provoquer une mise en rotation non souhaitée du crochet autour dudit organe de retenue. Dans un tel cas, la poursuite de l'ouverture est interdite afin d'éviter tout endommagement de la structure ou du verrou lui-même.

Pour pallier ce risque, il est possible par exemple de placer un balourd au niveau de l'extrémité recourbée du crochet afin d'assurer un écartement suffisant de l'ensemble crochet/organe de manoeuvre par rapport à l'organe de retenue lors de l'ouverture du verrou. Cependant, un tel arrangement influe de façon conséquente sur la masse, l'encombrement et la fiabilité du verrou.

La demande de brevet européen EP 0 431 769 décrit un verrou du même type comprenant un crochet dans lequel est prévue une lumière fermée oblongue traversée par l'axe principal. Les côtés de cette lumière constituent des surfaces d'appui limitant le mouvement latéral du crochet sur l'axe principal. Un tel verrou présente un encombrement réduit par rapport au verrou selon le brevet US 4 318 557, mais il est également nécessaire d'employer des moyens complémentaires, comme un balourd par exemple, pour aider le crochet à s'écarter suffisamment de l'organe de retenue au cours de l'ouverture du verrou.

La présente invention a pour but de remédier aux inconvénients cités précédemment, et consiste pour cela en un verrou prévu pour relier deux éléments l'un à l'autre par l'intermédiaire, d'une part, d'un crochet possédant une extrémité recourbée apte à venir en prise avec un organe de retenue solidaire du premier élément, et d'autre part, d'un axe principal destiné à être rattaché fixement au second élément, ledit verrou comprenant un organe de manoeuvre monté pivotant autour d'un axe d'extrémité situé à l'opposé de l'extrémité recourbée du crochet, et une articulation comprenant une paire de bielles de compression montées pivotantes autour de l'axe principal et d'un axe intermédiaire positionné entre l'axe principal et l'axe d'extrémité, remarquable en ce que le crochet est intercalé entre l'organe de manoeuvre et l'axe principal, et en ce qu'au moins une bielle de compression est pourvue d'un moyen de guidage au voisinage de son extrémité rattachée audit axe principal, ce moyen de guidage étant logé dans un évidement correspondant réalisé dans une partie de la surface dudit crochet faisant face au fond dudit organe de manoeuvre.

Ainsi, un verrou selon la présente invention est d'un encombrement réduit puisque le crochet est positionné entre l'organe de manoeuvre et l'axe principal, ce qui correspond à un espace généralement inoccupé dans un verrou standard. De plus, le crochet n'étant plus supporté par l'axe principal statique mais par des moyens de guidage suivant une trajectoire opposée à celle du crochet lors de l'ouverture de l'organe de manoeuvre, il en découle que ce crochet peut de ce fait convenablement s'écarter de l'organe de retenue sous l'effet de sa propre masse. Ces moyens de guidage au contact de la surface du crochet située en regard de l'organe de manoeuvre permettent alors d'éviter l'effondrement de l'ensemble constitué du crochet et des bielles de compression.

Avantageusement, chaque moyen de guidage est constitué par un ergot solidaire de la bielle de compression qui lui correspond.

L'évidement peut être plus important dans une zone servant de logement au moyen de guidage en fin de manoeuvre d'ouverture du verrou. En effet, cela permet d'amplifier l'écart angulaire entre le crochet et l'organe de retenue en fin d'ouverture.

Selon un premier mode de réalisation préféré de l'invention, en position verrouillée, le centre de l'axe principal et le crochet sont situés de part et d'autre d'une ligne apte à relier le centre de l'organe de retenue au centre de l'axe intermédiaire. Dans cette disposition, le verrouillage n'est plus stable, et le verrou peut basculer autour de l'organe de retenue. Par conséquent, le crochet est de préférence muni d'un talon apte à coiffer partiellement l'axe principal en position verrouillée. Ce talon anti-déverseur empêche alors tout basculement du verrou. Il doit être bien compris que la longueur, la largeur et la forme d'attaque du talon n'ont pas de fonction structurale et peuvent donc être réduits au minimum pour ménager la masse de l'ensemble.

Selon un second mode de réalisation préféré de l'invention, en position verrouillée, le centre de l'axe principal est intercalé entre le crochet et une ligne apte à relier le centre de l'organe de retenue au centre de l'axe intermédiaire.

Dans les deux modes de réalisation préférés, le crochet étant placé en appui contre l'axe principal en position de fermeture du verrou, il en découle que le verrouillage est rendu stable dès lors que l'axe intermédiaire vient au contact d'une butée de fin de course portée par le verrou.

Selon une première variante préférée de l'invention, le verrou comprend une seconde paire de bielles de compression montées pivotantes autour de l'axe intermédiaire et de l'axe d'extrémité.

Selon une deuxième variante préférée de l'invention, le verrou ne comprend qu'une seule paire de bielles de compression, ledit organe de manoeuvre étant rattaché fixement à l'axe intermédiaire. Préférentiellement, l'organe de manoeuvre se décompose en une structure principale présentant un axe autour duquel est articulée une structure d'extrémité située à l'opposé de l'axe d'extrémité. Il est ainsi possible, afin de permettre une bonne préhension de l'organe de manoeuvre, d'ouvrir préalablement la structure d'extrémité de quelques degrés. Avantageusement, une butée solidaire de la structure principale est apte à limiter la course angulaire de la structure d'extrémité. De plus, en position verrouillée, un ressort peut permettre de maintenir la structure d'extrémité alignée avec la structure principale.

Avantageusement encore, l'organe de manoeuvre comporte une fenêtre permettant d'accéder au crochet depuis l'extérieur. Ceci permet alors de vérifier, sans manoeuvre de déverrouillage et par simple toucher du crochet au travers de cette fenêtre, si les moyens constitutifs du verrou sont intègres et correctement agencés. La sécurité et la fiabilité globales du verrou s'en trouvent par conséquent fortement augmentées. De plus, un tel crochet peut présenter un alésage accessible depuis l'extérieur et dans lequel peut être logé un élément traversant apte à empêcher l'ouverture dudit verrou. Il est alors possible d'inhiber le système de déverrouillage en cas de doute sur l'intégrité du verrou ou simplement par simple sécurité d'exploitation.

L'invention sera mieux comprise à l'aide de la description détaillée qui est exposée ci-dessous en regard du dessin annexé dans lequel :
La figure 1 est une vue en perspective d'un verrou selon le premier mode de réalisation préféré de l'invention en position d'ouverture.
La figure 2 est une vue en perspective du verrou représenté à la figure 1 en position de fermeture.
La figure 3 est une vue en perspective du crochet constitutif du verrou représenté aux figures 1 et 2.
La figure 4 est une vue en coupe du verrou en position de fermeture reliant deux éléments d'une structure.
La figure 5 est une vue en coupe du verrou représenté à la figure 4 en position d'ouverture.
La figure 6 est une vue en coupe d'un verrou selon le second mode de réalisation préféré de l'invention reliant deux éléments d'une structure.
La figure 7 est une vue en coupe d'un verrou selon l'invention ne comportant qu'une seule paire de bielles de compression.
La figure 8 est une vue en coupe du verrou représenté à la figure 7 au début de la manoeuvre d'ouverture.
La figure 9 est une vue en coupe d'un verrou ne faisant pas partie de l'invention comportant un organe de manoeuvre muni d'une fenêtre.
La figure 10 est une vue partielle en coupe d'un verrou selon l'invention présentant un alésage accessible depuis l'extérieur.

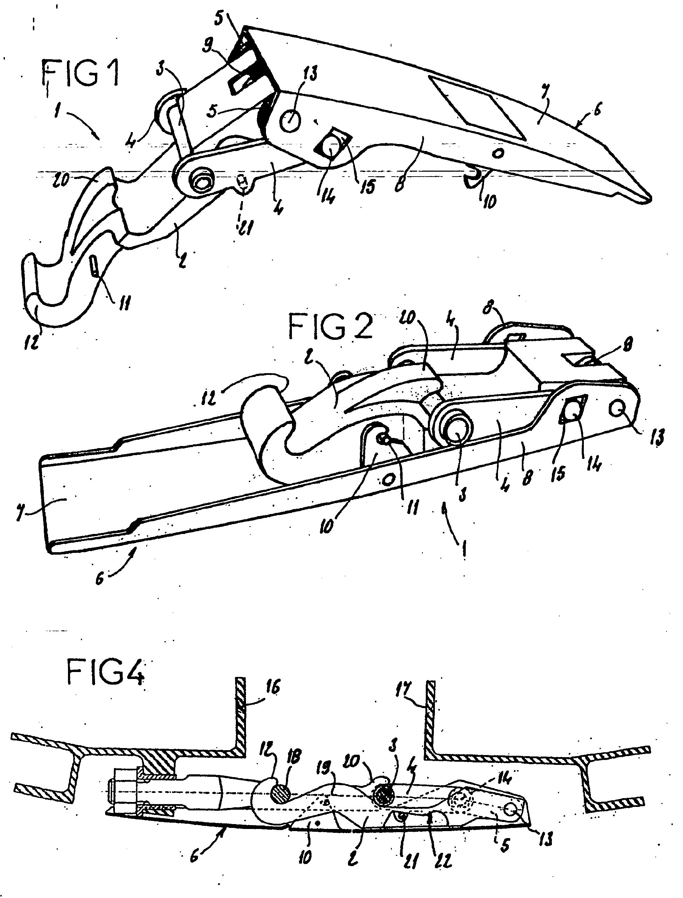

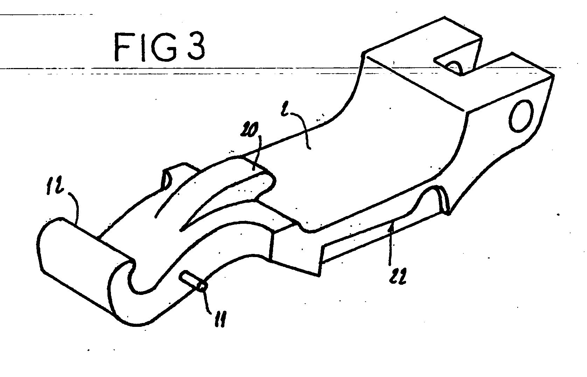

Un verrou 1 selon le premier mode de réalisation préféré de l'invention, tel que représenté aux figures 1 à 5, est prévu pour relier deux panneaux 16, 17 d'une structure d'aéroplane par l'intermédiaire, d'une part, d'un crochet 2 apte à venir en prise avec un organe de retenue 18 solidaire du panneau 16, et d'autre part, d'un axe principal 3 rattaché fixement au panneau 17.

Ce verrou 1 comprend une articulation comportant une première paire de bielles 4 de compression et une seconde paire de bielles 5 de compression, un organe de manoeuvre réalisée sous la forme d'une poignée 6 comprenant un fond 7 et deux rabats latéraux 8, un ressort 9 prévu pour écarter ladite poignée 6 du crochet 2, et un mécanisme de déverrouillage comprenant un crochet secondaire 10 monté rotatif associé à une tige 11 solidaire du crochet 2.

Plus précisément, le crochet 2 comprend une extrémité recourbée 12 et la poignée 6 est montée pivotante autour d'un axe d'extrémité 13, situé à l'opposé de l'extrémité recourbée 12, qui traverse les deux rabats latéraux 8 de la poignée 6. Les deux bielles 4, 5 de chaque paire sont positionnées de part et d'autre du crochet 2, chaque bielle 4 étant montée pivotante autour de l'axe principal 3 et d'un axe intermédiaire 14 positionné entre l'axe principal 3 et l'axe d'extrémité 13, et chaque bielle 5 étant montée pivotante autour de l'axe intermédiaire 14 et de l'axe d'extrémité 13. Chaque rabat 8 de la poignée 6 est doté d'une lumière 15 traversée par l'axe intermédiaire 14, cette lumière 15 étant réalisée de façon à posséder une section supérieure à celle de l'axe intermédiaire 14.

Comme représenté à la figure 4, lorsque le verrou 1 est en position de fermeture entre les deux panneaux 16, 17, l'extrémité recourbée 12 du crochet 2 est en prise avec l'organe de retenue 18 solidaire du panneau 16, et l'axe principal 3 est rendu solidaire du panneau 17. Le centre de l'axe principal 3 et le crochet 2 sont situés de part et d'autre d'une ligne 19 apte à relier le centre de l'organe de retenue 18 au centre de l'axe intermédiaire 14. Le crochet 2 est par conséquent muni d'un talon 20 anti-déverseur apte à coiffer partiellement l'axe principal 3 afin de stabiliser le verrou 1 en position de fermeture dès lors que l'axe intermédiaire 14 vient au contact d'une butée de fin de course (non représentée) portée par le verrou 1.

Chaque bielle 4 est pourvue d'un moyen de guidage au voisinage de son extrémité rattachée à l'axe principal 3. Ce moyen de guidage est constitué sous la forme d'un ergot 21 qui est logé dans un évidement 22 correspondant réalisé dans une partie de la surface du crochet 2 faisant face au fond 7 de la poignée 6.

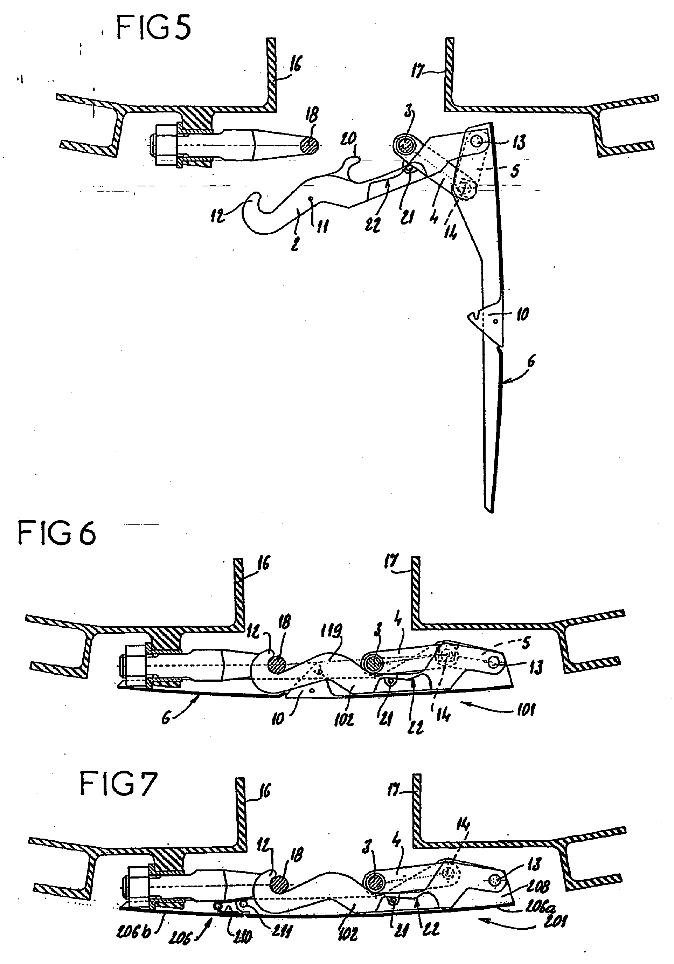

Une personne souhaitant procéder à l'ouverture du verrou 1 agit de la façon suivante. Elle exerce tout d'abord une pression sur le crochet secondaire 10 de façon à désengager ce dernier de la tige 11. Le ressort 9 peut ainsi se détendre et écarter la poignée 6 du crochet 2 de quelques degrés jusqu'à ce que chaque extrémité de l'axe intermédiaire 14 vienne en butée contre la bordure de la lumière 15 correspondante. Cette personne peut alors aisément se saisir de la poignée 6 du côté opposé à l'axe d'extrémité 13 et la forcer à pivoter autour de ce même axe. Ce faisant, sous l'action des deux paires de bielles 4, 5 de compression, l'extrémité recourbée 12 et le talon 20 du crochet 2 sont respectivement amenés à se désengager de l'organe de retenue 18 et de l'axe principal 3. Tout effondrement du crochet 2 et/ou des bielles 4, 5 est alors évité grâce aux deux ergots 21 qui demeurent en permanence au contact de la surface du crochet 2 dans l'évidement 22. Plus précisément, le crochet 2 glisse sur les ergots 21 qui suivent une trajectoire opposée à ce dernier, et l'axe principal 3 est maintenu à distance du crochet 2 durant toute la phase de déploiement. En fin d'ouverture, chaque ergot 21 est logé dans une zone où l'évidement 22 est plus important. Il en résulte, comme représenté à la figure 5, que l'écart angulaire entre l'organe de retenue 18 et le crochet 2 est amplifié.

Pour procéder à la fermeture du verrou 1, il suffit de se saisir de la poignée 6 et de l'entraîner en rotation en sens inverse. Le crochet 2 est alors amené à reculer tout en glissant sur les ergots 21 qui tendent à retrouver leur positionnement initial.

Il doit être bien compris que le talon 20 peut posséder une largeur identique à celle du crochet 2, ou posséder une largeur nettement inférieure à celle dudit crochet 2, comme représenté plus particulièrement aux figures 1 à 3. Dans ce dernier cas, le talon 20 s'apparente à une patte faisant saille du crochet 2.

Un verrou 101 selon le second mode de réalisation préféré de l'invention est représenté à la figure 6. Ce verrou 101 diffère principalement de celui décrit précédemment par le fait que, en position verrouillée, le centre de l'axe principal 3 est intercalé entre un crochet 102 et une ligne 119 apte à relier le centre de l'organe de retenue 18 au centre de l'axe intermédiaire 14. En position de fermeture, ce verrou 101 est par conséquent stable dès lors que l'axe intermédiaire 14 vient au contact d'une butée de fin de course (non représentée) portée par le verrou 101. Il n'est donc plus nécessaire de prévoir un talon anti-déverseur coiffant partiellement l'axe principal 3.

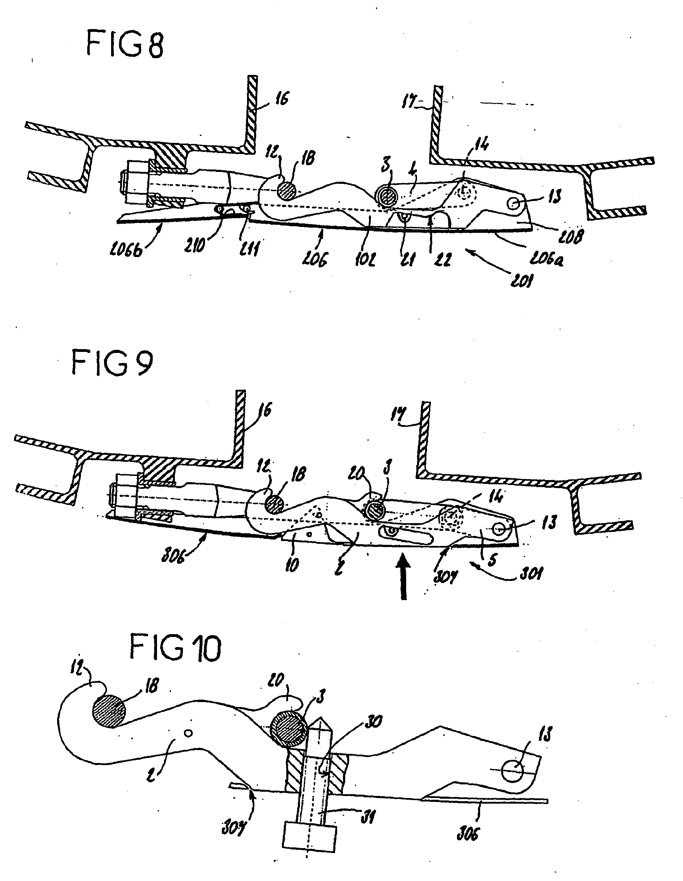

Un verrou 201 tel que représenté aux figures 7 et 8 diffère principalement de celui représenté à la figure 6 par le fait qu'il ne comporte qu'une seule paire de bielles 4 de compression reliant l'axe principal 3 à l'axe intermédiaire 14. La paire de bielles 5 reliant l'axe intermédiaire 14 à l'axe d'extrémité 13 a donc été supprimée. Or, comme décrit auparavant, ces bielles 5 couplées au ressort 9 et au crochet secondaire 10 permettaient d'écarter la poignée 6 du crochet 102 de quelques degrés durant les premiers instants de la phase d'ouverture du verrou. Pour compenser cela, ce verrou 201 comprend une poignée 206 qui, d'une part, possède deux rabats 208 latéraux rattachés à l'axe d'extrémité 13 mais également à l'axe intermédiaire 14, et d'autre part, se décompose en une structure principale 206a présentant un axe autour duquel est articulée une structure d'extrémité 206b située à l'opposé de l'axe d'extrémité 13. Comme représenté à la figure 8, il est ainsi possible, afin de permettre une bonne préhension de la poignée 206, d'ouvrir préalablement la structure d'extrémité 206b de quelques degrés. Une butée 211 solidaire de la structure principale 206a est prévue pour limiter la course angulaire de la structure d'extrémité 206b. De plus, en position verrouillée, un ressort 210 est apte à maintenir la structure d'extrémité 206b alignée avec la structure principale 206a.

Un verrou 301 tel que représenté à la figure 9 (ne faisant pas partie de l'invention) constitue une variante de réalisation du verrou 1 décrit précédemment. En effet, la différence principale réside dans le fait que ce verrou 301 comporte une poignée 306 présentant une fenêtre 307 permettant l'accès au crochet 2 depuis l'extérieur. Avantageusement, ce crochet 2 est réalisé de façon à s'étendre jusqu'aux lignes externes de la poignée 306. Il est alors possible de vérifier, sans manoeuvre de déverrouillage et par simple toucher du crochet 2 au travers de cette fenêtre 307, si les moyens constitutifs du verrou 301 sont intègres et correctement agencés. Il doit être bien compris qu'une telle fenêtre, d'une part, n'est aucunement limitée à des formes ou à des dimensions particulières, et d'autre part, peut également être pratiquée dans un verrou selon le second mode de réalisation préféré de l'invention.

Enfin, comme représenté à la figure 10, le crochet 2 peut présenter un alésage 30 dans lequel peut être logé un élément traversant 31 visible depuis l'extérieur et apte à empêcher l'ouverture de la poignée 306, et donc l'ouverture du verrou.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention telle que définie dans les revendications ci-jointes.

## Revendications

1. Verrou (1, 101) prévu pour relier deux éléments (16, 17) l'un à l'autre par l'intermédiaire, d'une part, d'un crochet (2, 102) possédant une extrémité recourbée (12) apte à venir en prise avec un organe de retenue (18) solidaire du premier élément, et d'autre part, d'un axe principal (3) destiné à être rattaché fixement au second élément, ledit verrou comprenant un organe de manoeuvre (6) monté pivotant autour d'un axe d'extrémité (13) situé à l'opposé de l'extrémité recourbée du crochet (2, 102), et une articulation comprenant une paire de bielles (4) de compression montées pivotantes autour de l'axe principal (3) et d'un axe intermédiaire (14) positionné entre l'axe principal (3) et l'axe d'extrémité (13), **caractérisé en ce que** le crochet (2, 102) est intercalé entre l'organe de manoeuvre (6) et l'axe principal (3), et **en ce qu'**au moins une bielle (4) de compression est pourvue d'un moyen de guidage (21) au voisinage de son extrémité rattachée audit axe principal (3), ce moyen de guidage (21) étant logé dans un évidement (22) correspondant réalisé dans une partie de la surface dudit crochet (2) faisant face au fond (7) dudit organe de manoeuvre (6), et étant apte à venir au contact de la surface du crochet située face à l'organe de manoeuvre durant l'ouverture du verrou.

2. Verrou (1, 101) selon la revendication 1, **caractérisé en ce que** chaque moyen de guidage est constitué par un ergot (21) solidaire de la bielle (4) de compression qui lui correspond.

3. Verrou (1, 101) selon l'une des revendications 1 ou 2, **caractérisé en ce que** l'évidement (22) est plus important dans une zone servant de logement au moyen de guidage (21) en fin de manoeuvre d'ouverture du verrou.

4. Verrou (1) selon l'une quelconque des revendications précédentes, **caractérisé en ce que**, en position verrouillée, le centre de l'axe principal (3) et le crochet (2) sont situés de part et d'autre d'une ligne (19) apte à relier le centre de l'organe de retenue (18) au centre de l'axe intermédiaire (14).

5. Verrou (1) selon la revendication 4, **caractérisé en ce que** le crochet (2) est muni d'un talon (20) apte à coiffer partiellement l'axe principal (3) en position verrouillée.

6. Verrou (101) selon l'une quelconque des revendications 1 à 3, **caractérisé en ce que**, en position verrouillée, le centre de l'axe principal (3) est intercalé entre le crochet (102) et une ligne (119) apte à relier le centre de l'organe de retenue (18) au centre de l'axe intermédiaire (14).

7. Verrou (1, 101) selon l'une quelconque des revendications précédentes, **caractérisé en qu'**il comprend une seconde paire de bielles (5) de compression montées pivotantes autour de l'axe intermédiaire (14) et de l'axe d'extrémité (13).

8. Verrou (201) selon l'une quelconque des revendications précédentes, **caractérisé en ce qu'**il ne comprend qu'une seule paire de bielles (4) de compression, ledit organe de manoeuvre (206) étant rattaché fixement à l'axe intermédiaire (14).

9. Verrou (201) selon la revendication 8, **caractérisé en ce que** l'organe de manoeuvre (206) se décompose en une structure principale (206a) présentant un axe autour duquel est articulée une structure d'extrémité (206b) située à l'opposé de l'axe d'extrémité (13).

10. Verrou (201) selon la revendication 9, **caractérisé en ce qu'**une butée (211) solidaire de la structure principale (206a) est apte à limiter la course angulaire de la structure d'extrémité (206b).

11. Verrou (201) selon l'une quelconque des revendications 9 ou 10, **caractérisé en ce que**, en position verrouillée, un ressort (210) permet de maintenir la structure d'extrémité (206b) alignée avec la structure principale (206a).

12. Verrou (301) selon l'une quelconque des revendications précédentes, **caractérisé en ce que** l'organe de manoeuvre (306) comporte une fenêtre (307) permettant d'accéder au crochet (2) depuis l'extérieur.

13. Verrou (301) selon la revendication 12, **caractérisé en ce que** le crochet (2) présente un alésage (30) accessible depuis l'extérieur et dans lequel peut être logé un élément traversant (31) apte à empêcher l'ouverture dudit verrou.

## Claims

1. Latch (1, 101) for joining two parts (16, 17) to one another via, on the one hand, a hook (2, 102) possessing a curved end (12) capable of engaging with a retaining member (18) connected to the first part, and, on the other hand, a main pin (3) designed to be attached firmly to the second part, said latch comprising an operating member (6) pivoting about an end pin (13) situated at the opposite end from the curved end of the hook (2, 102), and an articulation comprising a pair of compression links (4) pivoting on the main pin (3) and on an intermediate pin (14), the latter being positioned between the main pin (3) and the end pin (13), which latch is **characterized in that** the hook (2, 102) is located between the operating member (6) and the main pin (3), and **in that** at least one compression link (4) is provided with a guide means (21) near where its end is attached to said main pin (3), this guide means (21) being housed in a corresponding recess (22) formed in a part of the surface of said hook (2) which faces the back (7) of said operating member (6), and being capable of contacting that surface of the hook which is nearest the operating member during the opening of the latch.

2. Latch (1, 101) according to Claim 1, **characterized in that** each guide means consists of a spur (21) connected to its corresponding compression link (4).

3. Latch (1, 101) according to either of Claims 1 and 2, **characterized in that** the recess (22) is larger in an area acting as a housing for the guide means (21) at the end of the latch-opening operation.

4. Latch (1) according to any one of the preceding claims, **characterized in that,** in the locked position, the centre of the main pin (3) and the hook (2) lie on either side of a line (19) joining the centre of the retaining member (18) to the centre of the intermediate pin (14).

5. Latch (1) according to Claim 4, **characterized in that** the hook (2) is provided with a projection (20) capable of partially covering the main pin (3) in the locked position.

6. Latch (101) according to any one of Claims 1 to 3, **characterized in that**, in the locked position, the centre of the main pin (3) is positioned between the hook (102) and a line (119) capable of joining the centre of the retaining member (18) to the centre of the intermediate pin (14).

7. Latch (1, 101) according to any one of the preceding claims, **characterized in that** it comprises a second pair of compression links (5) pivoting on the intermediate pin (14) and on the end pin (13).

8. Latch (201) according to any one of the preceding claims, **characterized in that** it comprises only one pair of compression links (4), said operating member (206) being firmly attached to the intermediate pin (14).

9. Latch (201) according to Claim 8, **characterized in that** the operating member (206) is divided into a main structure (206a) having an axis on which pivots an end structure (206b) situated at the opposite end from the end pin (13).

10. Latch (201) according to Claim 9, **characterized in that** a stop-piece (211) belonging to the main structure (206a) is capable of limiting the angular travel of the end structure (206b).

11. Latch (201) according to either of Claims 9 and 10, **characterized in that**, in the locked position, a spring (210) keeps the end structure (206b) aligned with the main structure (206a).

12. Latch (301) according to any one of the preceding claims, **characterized in that** the operating member (306) comprises a window (307) giving access to the hook (2) from the outside.

13. Latch (301) according to Claim 12, **characterized in that** the hook (2) has a bore (30) that can be accessed from the outside and in which a through part (31) can be housed, which part can prevent the opening of said latch.

## Patentansprüche

1. Riegel (1, 101), der vorgesehen ist, um zwei Elemente (16, 17) mit Hilfe einerseits eines Hakens (2, 102), der ein umgebogenes Ende (12) besitzt, das mit einem mit dem ersten Element fest verbundenen Rückhalteorgan (18) in Eingriff kommen kann, und andererseits einer Hauptachse (3) miteinander zu verbinden, die dazu bestimmt ist, fest am zweiten Element befestigt zu werden, wobei der Riegel ein Betätigungsorgan (6), das um eine Endachse (13) schwenkbar montiert ist, die sich entgegengesetzt zum umgebogenen Ende des Hakens (2, 102) befindet, und ein Gelenk enthält, das ein Paar von Druckstangen (4) enthält, die um die Hauptachse (3) und um eine Zwischenachse (14) schwenkbar montiert sind, die zwischen der Hauptachse (3) und der Endachse (13) positioniert ist, **dadurch gekennzeichnet, dass** der Haken (2, 102) zwischen das Betätigungsorgan (6) und die Hauptachse (3) eingefügt ist, und dass mindestens eine Druckstange (4) in der Nähe ihres an der Hauptachse (3) befestigten Endes mit einer Führungseinrichtung (21) versehen ist, wobei diese Führungseinrichtung (21) in einer entsprechenden Aussparung (22) angeordnet ist, die in einem Teil der Fläche des Hakens (2) hergestellt ist, der dem Boden (7) des Betätigungsorgans (6) gegenüberliegt, und mit der Fläche des Hakens in Kontakt kommen kann, die sich während des Öffnens des Riegels gegenüber dem Betätigungsorgan befindet.

2. Riegel (1, 101) nach Anspruch 1, **dadurch gekennzeichnet, dass** jede Führungseinrichtung aus einem Zapfen (21) besteht, der mit der ihm entsprechenden Druckstange (4) fest verbunden ist.

3. Riegel (1, 101) nach einem der Ansprüche 1 oder 2, **dadurch gekennzeichnet, dass** die Aussparung (22) in einer Zone größer ist, die als Aufnahme für die Führungseinrichtung (21) am Ende der Öffnungsbetätigung des Riegels dient.

4. Riegel (1) nach einem der vorhergehenden Ansprüche, **dadurch gekennzeichnet, dass** die Mitte der Hauptachse (3) und der Haken (2) sich in der verriegelten Stellung zu beiden Seiten einer Linie (19) befinden, die die Mitte des Rückhalteorgans (18) mit der Mitte der Zwischenachse (14) verbinden kann.

5. Riegel (1) nach Anspruch 4, **dadurch gekennzeichnet, dass** der Haken (2) mit einem Vorsprung (20) versehen ist, der in der verriegelten Stellung teilweise die Hauptachse (3) bedecken kann.

6. Riegel (101) nach einem der Ansprüche 1 bis 3, **dadurch gekennzeichnet, dass** die Mitte der Hauptachse (3) in der verriegelten Stellung zwischen den Haken (102) und eine Linie (119) eingefügt ist, die die Mitte des Rückhalteorgans (18) mit der Mitte der Zwischenachse (14) verbinden kann.

7. Riegel (1, 101) nach einem der vorhergehenden Ansprüche, **dadurch gekennzeichnet, dass** er ein zweites Paar von Druckstangen (5) enthält, die um die Zwischenachse (14) und um die Endachse (13) schwenkbar montiert sind.

8. Riegel (201) nach einem der vorhergehenden Ansprüche, **dadurch gekennzeichnet, dass** er nur ein einziges Paar von Druckstangen (4) enthält, wobei das Betätigungsorgan (206) fest an der Zwischenachse (14) befestigt ist.

9. Riegel (201) nach Anspruch 8, **dadurch gekennzeichnet, dass** das Betätigungsorgan (206) in eine Hauptstruktur (206a) gegliedert ist, die eine Achse aufweist, um die eine Endstruktur (206b) angelenkt ist, die sich entgegengesetzt zur Endachse (13) befindet.

10. Riegel (201) nach Anspruch 9, **dadurch gekennzeichnet, dass** ein mit der Hauptstruktur (206a) fest verbundener Anschlag (211) den Winkelhub der Endstruktur (206b) begrenzen kann.

11. Riegel (201) nach einem der Ansprüche 9 oder 10, **dadurch gekennzeichnet, dass** eine Feder (210) es in der verriegelten Stellung ermöglicht, die Endstruktur (206b) mit der Hauptstruktur (206a) fluchtend ausgerichtet zu halten.

12. Riegel (301) nach einem der vorhergehenden Ansprüche, **dadurch gekennzeichnet, dass** das Betätigungsorgan (306) ein Fenster (307) aufweist, das den Zugang zum Haken (2) von außerhalb ermöglicht.

13. Riegel (301) nach Anspruch 12, **dadurch gekennzeichnet, dass** der Haken (2) eine Bohrung (30) aufweist, die von außen zugänglich ist und in der ein durchgehendes Element (31) aufgenommen werden kann, das das Öffnen des Riegels verhindern kann.
